(19) Europäisches Patentamt
European Patent Office
Office européen des brevets

(11) **EP 3 077 682 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(21) Anmeldenummer: **14808908.9**

(22) Anmeldetag: **28.11.2014**

(51) Int Cl.:
*F16B 2/00* (2006.01)      *F16B 43/00* (2006.01)

(86) Internationale Anmeldenummer:
**PCT/EP2014/076032**

(87) Internationale Veröffentlichungsnummer:
**WO 2015/082365 (11.06.2015 Gazette 2015/23)**

(54) **SCHICHTANORDNUNG ZUR VERBINDUNG VON BAUTEILEN**

LAYER ARRANGEMENT FOR CONNECTING COMPONENTS

SYSTÈME STRATIFIÉ POUR L'ASSEMBLAGE DE COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2013 DE 102013113616**

(43) Veröffentlichungstag der Anmeldung:
**12.10.2016 Patentblatt 2016/41**

(73) Patentinhaber: **CCT Composite Coating Technologies GmbH**
**70599 Stuttgart (DE)**

(72) Erfinder:
• **MEYER, Jürgen**
**87437 Kempten (DE)**
• **KURRLE, Matthias**
**70599 Stuttgart (DE)**

(74) Vertreter: **Raible Deissler Lehmann Patentanwälte PartG mbB**
**Senefelderstrasse 26**
**70176 Stuttgart (DE)**

(56) Entgegenhaltungen:
DE-A1- 10 134 809     DE-A1-102013 107 347
FR-A1- 2 565 870     GB-A- 2 415 025

**Beschreibung**

Die Erfindung betrifft eine Schichtanordnung zur Verbindung von Bauteilen, insbesondere zur reibungserhöhenden bzw. reibwerterhöhenden Verbindung, und ein Verfahren zur Herstellung einer solchen Schichtanordnung. Verbindungselemente zur reibungserhöhenden Verbindung von Bauteilen werden beispielsweise im Automobilbereich und in der Antriebstechnik in großer Stückzahl eingesetzt, um die Reibung zwischen zu fügenden Bauteilen, beispielsweise in Stirnpressverbindungen, zu erhöhen und eine sichere, kraftschlüssige bzw. mikroformschlüssige Verbindung zu ermöglichen. Derartige Verbindungselemente enthalten beispielsweise Hartstoffpartikel, die teilweise an den Oberflächen der Verbindungselemente herausragen und bei Überschreitung einer Mindestflächenpressung in die jeweiligen Flächen der zu fügenden Bauteile eindringen und dadurch eine Mikroverzahnung bewirken. Der Haftbeiwert (Haftkoeffizient) kann so z.B. um einen Faktor 2 - 3 erhöht werden, um ein Durchrutschen der Bauteile zu verhindern.
Die EP 0 961 038 B1 zeigt ein Verbindungselement für eine reibungserhöhende Verbindung. Das Verbindungselement hat eine federelastische Folie mit einer Eigenfestigkeit, die mindestens so hoch ist wie die Eigenfestigkeit der zu fügenden Werkstücke. Auf der federelastischen Folie sind Partikel mittels einer Bindephase fixiert, wobei die Bindephase eine Festigkeit hat, die der Festigkeit der zu fügenden Werkstücke entspricht.

Die EP 1 564 418 B1 zeigt ein Verbindungselement zur reibungserhöhenden Verbindung vom Werkstücken, welches eine Metallfolie mit plastisch elastischen Eigenschaften hat, die an ihrer Oberfläche mittels einer metallischen Bindephase fixierte Hartstoffpartikel aufweist.
Die FR 2 565 870 A1 zeigt ein Verfahren zur Herstellung eines Diamantwerkzeugs, insbesondere eines Polierwerkzeugs. Ein dünnes Blech hat einen Kunststoffträger und eine dünne Metallschicht. Auf der dünnen Metallschicht werden teilweise isolierende Bereiche und teilweise Diamanten vorgesehen, wobei die Diamanten durch eine metallische Primär- und Sekundärfixierung gehalten werden.
Es ist eine Aufgabe der Erfindung, eine neue Schichtanordnung und ein Verfahren zur Herstellung der Schichtanordnung bereitzustellen.

Diese Aufgabe wird gelöst durch eine Schichtanordnung zur reibungserhöhenden Verbindung von zu fügenden Bauteilen, welche ein Substrat mit einem Grundkörper aus einem organischen Polymer und mindestens eine mit dem Substrat verbundene Funktionsschicht mit einer metallischen Bindephase und in der metallischen Bindephase fixierten Hartstoffpartikeln aufweist.

Versuche haben ergeben, dass mit einer solchen Schichtanordnung wider Erwarten eine ähnlich gute Erhöhung des Haftbeiwerts erzielt werden kann wie bei einer Schichtanordnung auf Basis einer Metallfolie. Zudem haben Versuche ergeben, dass eine entsprechende Schichtanordnung zu einer hohen Korrosionsbeständigkeit des Verbindungselementes führt.

Gemäß einer bevorzugten Ausführungsform ist das Substrat nicht-magnetisch ausgebildet. Durch die Verwendung eines nicht-magnetischen Substrats ist es möglich, die Schichtanordnung insgesamt nicht-magnetisch auszubilden und so z.B. einen Einsatz in einem Magnetresonanztomografen zu ermöglichen.

Gemäß einer bevorzugten Ausführungsform sind die mindestens zwei Funktionsschichten (41, 42) durch den Grundkörper zumindest bereichsweise elektrisch voneinander isoliert. Bevorzugt wird eine solche Schichtanordnung an einer Lagerstelle zwischen einem Lager und der Lagerstelle angeordnet, um dort zumindest lokal eine elektrische Isolierung zwischen dem Lager und der Lagerstelle zu erzielen und die Gefahr einer elektrostatischen Entladung über das Lager zu verringern.

Die Aufgabe wird auch gelöst durch ein Verfahren zur Herstellung einer Schichtanordnung, welche Schichtanordnung ein Substrat mit einem Grundkörper aus einem organischen Polymer und mindestens eine mit dem Substrat verbundene Funktionsschicht mit einer metallischen Bindephase und in der metallischen Bindephase fixierten Hartstoffpartikeln aufweist, welches Verfahren den Schritt aufweist, dass die Funktionsschicht mit dem Substrat verbunden wird. Dieses Verfahren ist dazu geeignet, eine entsprechende Schichtanordnung herzustellen.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen, sowie aus den Unteransprüchen. Es zeigt

Fig. 1     einen Schnitt durch eine reibungserhöhende Folie mit einem Substrat und mit einer Funktionsschicht auf der Ober- und Unterseite,

Fig. 2     einen Schnitt durch eine reibungserhöhende Folie mit einem beschichteten Substrat und einer beidseitigen Funktionsschicht

Fig. 3     einen Schnitt durch eine reibungserhöhende Folie mit einem kaschierten Substrat und einer beidseitigen Funktionsschicht

Fig. 4     einen Schnitt durch eine reibungserhöhende Folie gemäß Fig. 1 bis Fig. 3, mit nur einer Funktionsschicht,

Fig. 5     einen Schnitt durch eine unbeschichtete Kante einer reibungserhöhenden Folie gemäß Fig. 1 bis Fig. 4,

Fig. 6     einen Schnitt durch eine beschichtete Kante einer reibungserhöhenden Folie gemäß Fig. 1 bis Fig. 4,

Fig. 7    einen Schnitt durch zwei unter Verwendung eine reibungserhöhenden Folie gemäß Fig. 1 bis Fig. 6 gefügte Werkstücke,

Fig. 8    eine Draufsicht auf ein Verbindungselement aus einer reibungserhöhenden Folie gemäß Fig. 1 bis Fig. 7,

Fig. 9    einen Schnitt durch zwei unter Verwendung einer reibungserhöhenden Folie gemäß Fig. 1 bis Fig. 8 gefügte Bauteile,

Fig. 10    eine Rutschkurve für einen statischen Versuch bei einem Fugendruck in Höhe von 100 MPa, und

Fig. 11    eine Rutschkurve für einen dynamischen Versuch bei einem Fugendruck in Höhe von 100 MPa.

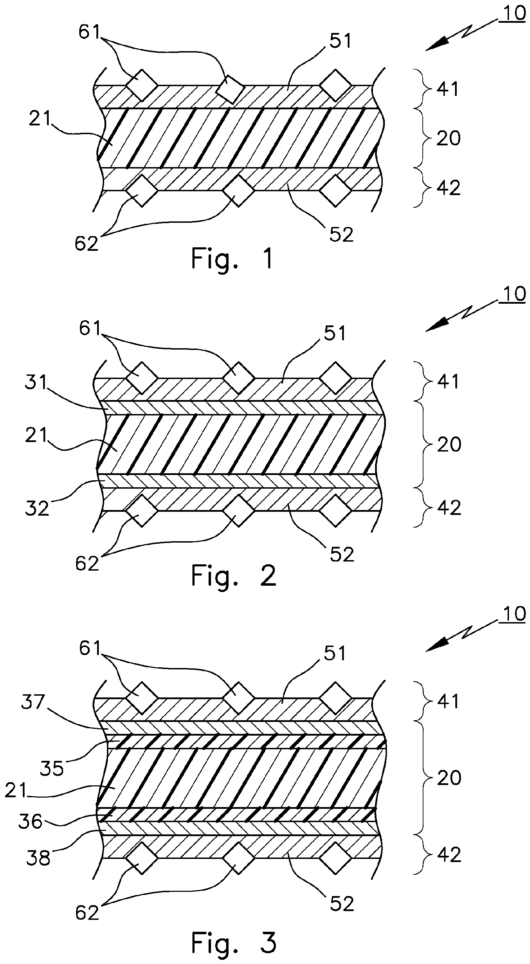

**Fig. 1** zeigt eine Folie (Schichtanordnung, Verbindungselement) 10 mit einem Substrat (Basismaterial) 20, einer ersten (oberen) Funktionsschicht (Deckschicht) 41 und einer zweiten (unteren) Funktionsschicht (Deckschicht) 42, wobei die zweite Funktionsschicht 42 auf der der ersten Funktionsschicht 41 gegenüberliegenden Seite des Substrats 20 angeordnet ist. Der allgemeinere Begriff Schichtanordnung 10 umfasst auch voluminöse Ausführungsformen, z.B. in Würfelform. Die folgenden Ausführungsbeispiele zeigen jedoch folienartige Schichtanordnungen 10, so dass im Folgenden von Folien 10 gesprochen wird.

Die Funktionsschicht 41, 42 hat eine Bindephase (Bindematrix) 51 bzw. 52, in der Partikel 61 bzw. 62 angeordnet (fixiert) sind.

Die Bindephase 51, ist wegen der höheren Festigkeit metallisch, besteht also aus einem Metall oder einer Metalllegierung, und wirkt als metallische Matrix, in der die Partikel 61, 62 fixiert sind.

Bevorzugte Metalle für die Bindephase 51, 52 sind Nickel (Ni) und Kupfer (Cu).

Bevorzugte Metalllegierungen für die Bindephase 51, 52 sind Nickellegierungen und Kupferlegierungen. Besonders bevorzugt ist eine metallische Bindephase bestehend aus einer chemisch abgeschiedenen Nickel-Phosphorlegierung oder Nickel-Borlegierung.

Entsprechende Verbindungselemente mit den genannten Metallen bzw. Metalllegierungen zeichnen sich durch eine besonders konturenscharfe bzw. konturengetreue Abbildung des die metallische Bindephase und Hartstoffe enthaltenden Überzuges mit sehr engen Toleranzen aus, ohne dass der sonst übliche überproportionale Schichtaufbau im Bereich der Kanten zu beobachten ist. Die Substratoberfläche wird also durch die Bindephase 51, 52 vergleichsweise exakt wiedergegeben. Auch kann bei einem solchen Verbindungselement der reibungserhöhende Überzug planeben und mit nur geringen Abweichungen erzeugt werden. Die führt zu einem großen, reproduzierbaren Haftbeiwert.

Bei der Verwendung von NiP und Cu wird die Schichtanordnung unmagnetisch, wenn der Massenanteil des Phosphors (P) über 0,10 steigt. Dies entspricht in Prozent ausgedrückt einem Massenanteil von 10 %. Ein solcher Massenanteil über 0,10 ist vorteilhaft, sofern die Schichtanordnung nicht-magnetisch (unmagnetisch, amagnetisch) ausgebildet werden soll. Weitere bevorzugte Metalllegierungen sind Kupferlegierungen auf Kupfer-Zinn-Basis und Nickellegierungen auf Nickel-Zinn-Basis.

Kupfer-Zinn-Schichten enthalten 80 % - 90 % Kupfer und 10 % - 20 % Zinn und weisen Schichthärten von 300-400 HV0.1 auf. Die Nickel-Zinn-Schichten bestehen zu 65 % - 75 % aus Zinn und zu 25 % - 35 % aus Nickel. Die Schichthärte liegt bei etwa 700 HV 0.1. Beide Legierungen zeigen eine hohe Korrosionsbeständigkeit und sind unmagnetisch.

Das Substrat 20 hat bevorzugt einen Grundkörper (Trägermaterial) 21 aus einem organischen Material. In Fig. 1 weist das Substrat 20 nur den Grundkörper 21 auf, in Fig. 2 und Fig. 3 weist es aber weitere Schichten 31, 32 bzw. 35, 36 auf. Als organisches Material wird bevorzugt ein organisches Polymer (Kunststoff) verwendet. Es können z.B. Polyimide (PI) verwendet werden, die als Hochleistungskunststoffe und als Substrate für Leiterplatten eingesetzt werden. Zur Gruppe der Polyimide gehört z.B. Polybenzimidazol (PBI) und Polyetherimide (PEI). Ebenfalls geeignet sind Aramide (z.B. Kevlar von DuPont). Bevorzugt werden faserverstärkte Kunststoffe verwendet, z.B. kohlenstofffaserverstärkter Kunststoff bzw. Carbon-faserverstärkter Kunststoff (CFK bzw. Englisch CFRP), glasfaserverstärkter Kunststoff (GFK bzw. Englisch GRP).

Als Grundkörper 21 können bevorzugt so genannte Prepregs verwendet werden. Der Begriff Prepreg ist die englische Kurzform für preimpregnated fibers, zu deutsch: "vorimprägnierte Fasern". Prepreg bezeichnet ein Halbzeug, bestehend aus Endlosfasern und einer - zumindest vor Beginn der Verarbeitung - ungehärteten duroplastischen Kunststoffmatrix, das v. a. im Leichtbau Verwendung findet. Man kann Prepregs auch als endlosfaserverstärkten duroplastischen Werkstoff bezeichnen. Die Endlosfasern können als reine unidirektionale Schicht, als Gewebe oder Gelege vorliegen. Prepreg wird bahnförmig, auf Rollen gewickelt, geliefert, und vor der Aushärtung ist es biegbar. Durch die Biegbarkeit der Prepregs ist es möglich, eine Schichtanordnung 10 mit Prepregs als Grundkörper 21 beispielsweise an einem - nicht dargestellten - Winkelflansch einzusetzen und im Winkelbereich zu knicken. Es ist auch möglich, die Prepregs unter vorgegebenen Temperaturen auszuhärten und ihnen hierdurch eine vorgegebenen, feste Form zu geben.

Glasfaserverstärkter Kunststoff hat im Vergleich zu Faser-Kunststoff-Verbunden aus anderen Verstärkungsfasern einen relativ niedrigen Elastizitätsmodul. Selbst in Faserrichtung liegt der Elastizitätsmodul unter dem von Aluminium. Ein Vorteil der Glasfaser im Verbund mit einer passenden Kunststoffmatrix liegt in der hohen Bruchdehnung und der elastischen Energieaufnahme. Diese Eigenschaften haben sich bei der Verwendung als reibungserhöhende Scheibe als sehr vorteilhaft erwiesen.

Es folgen beispielhafte Werte für den Elastizitätsmodul:

| | |
|---|---|
| Stahl: | 205 GPa |
| Al-Legierungen: | 70 GPa |
| Epoxidharz mit Quarzmehl: | 12-14 GPa |
| PVC: | 3 GPa |
| Polyäthylen: | 0.5 - 1.0 GPa |
| Epoxidharz mit E-Glasfaser (Faservolumen 60 %): | |
| | 45 GPa in Faserrichtung |
| | 13 GPa quer zur Faserrichtung |
| Leiterplattenmaterial FR4 (E-Modul Biegeversuch nach DIN): | |
| | 18.000 MPa |

Die in der Patentschrift EP 1 564 418 genannte reibungserhöhende Scheibe aus Federbandstahl hat eine Zugfestigkeit von 970 N/mm$^2$. Federbandstahl hat beispielhaft eine Zugfestigkeit zwischen 1.000 und 2.000 N/mm$^2$ und einen Elastizitätsmodul von etwa 205 GPa.

Das Leiterplattenmaterial FR 4, das beispielsweise bezogen werden kann über die Firma durolaminat ag, Industriezone Ried, 4222 Zwingen, Schweiz, hat eine Zugfestigkeit von 220 MPa.

Die Werkstoffkennwerte zeigen, dass das erfindungsgemäße Basismaterial zwar einerseits eine höhere Festigkeit als üblicher Kunststoff (z.B. PVC, PE) hat, aber andererseits eine deutlich geringere Festigkeit sowie einen geringeren Elastizitätsmodul als beispielsweise ein Federstahl.

Ebenso sind die genannten mechanischen Kennwerte geringer als bei den meisten Konstruktionswerkstoffen (z.B. Stahl), so dass der Fachmann nicht davon ausgehen konnte, dass ein entsprechendes Basismaterial für die Fertigung einer reibungserhöhenden Folie geeignet ist, insbesondere im Hinblick auf die Lehre aus den Patenten EP 1 564 418 B1 und EP 0 961 038 B1.

Für die Partikel 61, 62 werden bevorzugt Hartstoffpartikel (engl. Hartstoffe: hard materials bzw. super hard materials) verwendet. Hierfür eignen sich z.B. einer oder mehrere der folgenden Hartstoffe:

- Diamant
- Nitride, z.B. kubisches Bornitrid oder Siliciumnitrid
- Carbide, z.B. Borcarbid, Wolframcarbid, Siliciumcarbid, Titancarbid, Tantalcarbid
- Boride, z.B. Titanborid
- Oxide wie z.B. Aluminiumoxid, Zirconiumdioxid

In Römpps Chemie-Lexikon werden als Hartstoffe auch Carbonitride, Silicide und andere Werkstoffe genannt.

Die Partikel 61, 62 haben bevorzugt eine mittlere Größe, die im Bereich von 10 $\mu$m bis 40 $\mu$m liegt. In Abhängigkeit vom Anwendungsfall können aber auch kleinere oder größere mittlere Größen eingesetzt werden. Viele Hartstoffpartikel sind mit vorgegebenen mittleren Größen und geringen Toleranzen erhältlich. Der Flächenanteil der Partikel 61, 62 pro Flächenanteil der Funktionsschicht 41, 42 darf nicht zu gering sein, da ansonsten im Beanspruchungsfalle die auf das einzelne Partikel wirkenden Kräfte so groß werden können, dass dieses aus der Bindephase ausbricht. Der Anteil darf allerdings auch nicht zu groß sein, da ansonsten ggf. die Normalkraft beim Fügen der Bauteile nicht groß genug ist, um ein Eindrücken der Partikel 61, 62 in die Bauteile zu ermöglichen. Abhängig vom Anwendungsfall ist z.B. eine Abdeckung der Oberfläche der Funktionsschicht von 10 % bis 30 % durch die Partikel 61, 62 geeignet.

Als Bindephase 51, 52 können z.B. Ni, Cu, Co, Cr, Zn oder Legierungen wie Bronze (z.B. CuSn) verwendet werden. Bevorzugt ist die Bindephase 51, 52 so ausgebildet, dass sie im Wesentlichen überall die gleiche Dicke hat. Hierdurch werden Toleranzen bei der Fügung gering gehalten. Die Bindephase 51, 52 muss dick genug sein, um die Partikel 61, 62 sicher fixieren zu können, sie darf diese jedoch nicht vollständig umschließen, da dann keine Mikroverzahnung mit den zu fügenden Bauteilen eintritt. Die Dicke der Bindephase 51, 52 liegt bevorzugt im Bereich von 30 % bis 75 % der mittleren Dicke der Partikel 61, 62. Größere Dicken der Bindephase 51, 52 sind grundsätzlich auch möglich. Bei den oben genannten mittleren Größen der Hartstoffpartikel 61, 62 im Bereich von 10 $\mu$m bis 40 $\mu$m werden bevorzugt entsprechende Dicken der Bindephase 51, 52 von 4 $\mu$m bis 30 $\mu$m verwendet.

Als Bindephase 51, 52 gut geeignet ist Ni bzw. NiP. Besonders bevorzugt wird eine Ni-P-Legierung verwendet, die Phosphor mit einem Massenanteils größer oder gleich 10 % hat. Dies ermöglicht eine gute Korrosionsbeständigkeit der Bindephase, und die Bindephase ist in diesem P-Bereich nicht-magnetisch bzw. unmagnetisch.

Es kann auch Cu als Bindephase 51, 52 verwendet werden. Cu ist edel, hat also ein positives Standardpotential. Cu ist auch edler als Ni. Daher ist es nicht für ein unedles Substrat aus Federstahl geeignet. Bei einem organischen Substrat kann dagegen Kupfer als Bindephase 51, 52 verwendet werden, ebenso bei einem noch edleren Nichteisenmetall oder einer noch edleren Nichteisen-Legierung.

Die Folie 10 ist bevorzugt flächig mit zwei sich gegenüber liegenden Grundflächen und mit Kanten ausgebildet.

**Festigkeit des organischen Materials**

Das organische Material des Grundkörpers 21 hat bevorzugt eine so hohe Festigkeit, dass das Substrat 20 und die Bindephase 51, 52 zusammen so fest sind, dass die Partikel 61, 62 bei der Flächenpressung der zu fügenden Bauteile bevorzugt in die zu fügenden Bauteile eindringen und weiter bevorzugt nicht oder nur gering in das Substrat 20 eingepresst werden. Daher werden als organisches Material bevorzugt faserverstärkte Kunststoffe verwendet.

Für den Fachmann ist nach der herrschenden Lehre die Festigkeit des Materials des Grundkörpers 21 wichtig, da die Kraft zwischen den zu fügenden Bauteilen von dem einen Bauteil über die Partikel 61, 62 in die Bindephase 51, 52 eingeleitet wird, anschließend von der Bindephase 51, 52 auf das Substrat 20 übertragen wird, anschließend vom Substrat 20 auf die gegenüberliegende Bindephase 52, 51 übertragen wird, und anschließend von der gegenüberliegenden Bindephase 52, 51 auf die Partikel 62, 61 übertragen wird, die die Kraft in das andere Bauteil einleiten. Das Substrat 20 ist somit aktiv an der Kraftübertragung beteiligt und hat daher bevorzugt eine hohe Festigkeit.

Die Festigkeit des organischen Materials des Grundkörpers 21 ist üblicherweise (deutlich) geringer als die von Federstahl oder die von zu fügenden metallischen Bauteilen.

*In Versuchen wurde jedoch überraschenderweise festgestellt, dass die Festigkeit des Substrats entgegen der herrschenden Lehre nicht ausschlaggebend für die Funktionstüchtigkeit der Folie ist. Es wird auf Basis der durchgeführten Versuche vermutet, dass die Festigkeit der Bindephase einen deutlich höheren Beitrag zur Gesamtfestigkeit der Schichtanordnung leistet und somit grundsätzlich eine größere Flexibilität bei der Wahl des Substratwerkstoffes besteht.*

**Herstellung**

Die Funktionsschicht 41, 42 wird bevorzugt mittels chemischer (außenstromloser) Beschichtung oder galvanischer Beschichtung aufgebracht. Die meisten organischen Materialien sind jedoch elektrisch nicht leitend, und daher ist es in vielen Fällen nicht möglich, direkt auf das organische Material des Grundkörpers 21 zu beschichten.

Eine direkte Beschichtung ist z.B. möglich durch Kunststoffgalvanisierung, also z.B. vorangehendes Beizen und Aktivieren des organischen Materials, optional chemische Metallisierung einer Zwischenschicht (z.B. Cu) und anschließende chemische oder galvanische Abscheidung der Funktionsschicht 41, 42.

**Fig. 2** zeigt eine Folie 10, bei der das Substrat 20 auf jeder Seite des Grundkörpers 21 eine Zwischenschicht 31, 32 aufweist, die jeweils zwischen der Funktionsschicht 41, 42 und dem Grundkörper 21 vorgesehen ist. Bevorzugt ist die Zwischenschicht 31, 32 elektrisch leitfähig (z.B. metallisch), und sie wird vor der chemischen oder galvanischen Beschichtung mit der Funktionsschicht 41, 42 aufgebracht, z.B. durch eines der folgenden Verfahren:

- PVD (physical vapour deposition, physikalische Gasphasenabscheidung)
- CVD (chemical vapour deposition, chemische Gasphasenabscheidung)
- Chemische Metallisierung
- Thermisches Spritzen
- Kaschierung mit einer Metallfolie

Bei den Funktionsschichen 41, 42 beträgt die Dicke der Bindephase 51, 52 beispielhaft ca. 60 % der mittleren Dicke der Partikel 61, 62.

**Fig. 3** zeigt die Verwendung einer kaschierten Folie 10. Das Substrat 20 hat neben dem organischen Grundkörper 21 zusätzlich mindestens eine metallische Schicht (Zwischenschicht) 37, 38, bevorzugt eine Cu- oder Ni-Schicht 37, 38, die über eine Schicht (Befestigungsschicht) 35, 36 mit dem organischen Grundkörper 21 verbunden ist. Die Schicht 35, 36 weist bevorzugt ein Kaschiermittel, insbesondere einen Kleber, ein Bindemittel, einen Lack oder etwas Ähnliches auf, um eine sichere Verbindung der metallischen Schicht 37, 38 mit dem Grundkörper 21 zu bewirken.

Alternativ kann auch eine elektrisch leitfähige, nicht-metallische Schicht 37, 38 verwendet werden, z.B. aus einem leitfähigen Kunststoff.

Bei den Funktionsschichen 41, 42 beträgt die Dicke der Bindephase 51, 52 beispielhaft ca. 45 % der mittleren Dicke der Partikel 61, 62.

Die Zwischenschichten 31, 32 (Fig. 2) bzw. 37, 38 (Fig. 3) können aus dem gleichen Material wie die Bindephase 51, 52 bestehen (vorteilhaft wegen der Verringerung der Gefahr einer elektrochemischen Reaktion), sie können aber auch aus einem anderen Material bestehen, z.B. einem härteren Material als dem der Bindephase 51, 52. Zur Kaschierung wird bevorzugt eine Folie aus einem Metall eingesetzt, das ein gleiches oder edleres elektrochemisches Potential als das der Bindephase 51, 52 aufweist. Da Nickel und Kupfer diese Voraussetzung erfüllen und zudem großtechnisch in Folienform verfügbar sind, stellen diese Varianten besonders bevorzugte Ausführungen dar.

Kaschierte Folien werden z.B. bei der Leiterplattenherstellung verwendet, und hierfür sind auch beidseitig kaschiert Prepregs erhältlich, die für die Schichtanordnung verwendet werden können.

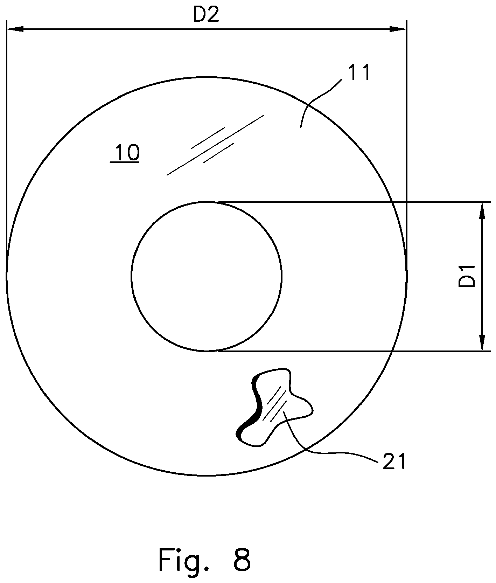

Die Folie 10 kann bevorzugt in Form von Platten oder aber in Form von aufgerollter Bandware (ähnlich einer Klebeband-Rolle) hergestellt werden, und die Verbindungselemente (vgl. 11 in Fig. 8) können bevorzugt durch eines der folgenden Verfahren aus der Folie hergestellt werden.

- Stanzen mit einer Stanze unter Verwendung eines Stanzmessers bzw. einer Stanzform
- Schneiden mit einer Wasserstrahlschneidemaschine durch einen Wasserstrahl
- Schneiden mit einem Laser durch einen Laserstrahl

Die Verwendung einer Wasserstrahlschneidemaschine hat gute Ergebnisse gebracht, also insbesondere saubere Ränder ohne Verformung oder Abbrand.

**Elektrische Leitfähigkeit**

Bei der Verwendung eines organischen Materials für den Grundkörper 20 kann die Folie 10 bzw. das Verbindungselement 11 (Fig. 8) elektrisch nichtleitend ausgebildet werden, um zumindest lokal eine elektrische Isolierung oder Potenzialtrennung zwischen den zu fügenden Werkstücken zu bewirken. Hierzu werden bevorzugt die äußeren Ränder der Folie 10 bzw. des Verbindungselements nicht oder zumindest nicht durchgehend beschichtet, um eine sehr gute elektrische Isolierung zu erzielen. Hierdurch kann die Gefahr einer elektrostatischen Entladung im Bereich des Verbindungselements 11 verringert werden, und dies ist beispielsweise im Bereich von Lagerstellen vorteilhaft, da eine Zerstörung des Lagers durch elektrostatische Entladung verhindert wird.

Bevorzugt ist der spezifische Widerstand $\rho$ des Grundkörpers 21 aus organischem Material und/oder der gesamten Folie 10 bei 20 °C größer als $10^9$ Ohm * m, da die elektrische Leitfähigkeit dann durch weitere Maßnahmen beeinflusst werden kann, wie dies unten beschrieben wird. Ein solcher spezifische Widerstand ist z.B. erreichbar durch ein organisches Material 21 mit den folgenden Eigenschaften

- Trägermaterial E-Glas-Gewebe; Harzsystem primär (difunktionelles) Epoxy, sekundär polyfunktionelles Epoxy, anorganischer Füllstoff. Ein solches Material ist z.B. erhältlich von der Fa. Isola GmbH in Düren, Deutschland, Handelsnamen IS400, IS420, PCL370HR

Soll die Folie 10 dagegen elektrisch leitend sein, so bestehen hierfür mehrere Möglichkeiten, die einzeln oder auch in Kombination verwendet werden können:

- Verwendung eines elektrisch leitfähigen organischen Materials für den Grundkörper 21, und/oder
- Beschichtung der seitlichen Kanten der Folie 10 mit einem leitfähigen Material, und/oder
- Vorsehen von Durchkontaktierungen, wie sie auch bei Leiterplatten vorgesehen werden.

Die elektrische Leitfähigkeit kann auch lokal an bestimmten Stellen vorgesehen werden, um gezielt an diesen Stellen einen elektrischen Strom zu ermöglichen, an anderen Stellen jedoch die Wirkung als Isolator beizubehalten.

**Magnetische Eigenschaften**

Ein weiterer Vorteil des organischen Materials ist, dass dieses - anders als Federstahl - im Normalfall nichtmagnetisch ist. Bei Verwendung nicht-magnetischer Metalle für die Funktionsschichten 41, 42 (z.B. Ni-P mit einem PhosphorMassenanteil größer als 10 %) und - soweit vorhanden - die Zwischenschichten 31, 32 (Fig. 2) bzw. 37, 38 (Fig. 3) (z.B. Kupfer) ist so z.B. auch ein Einsatz in Magnetresonanztomografen möglich. Die gesamte Schichtanordnung 10 ist also nicht-magnetisch ausgebildet.

**Dicke der Folie 10**

Die in den Figuren dargestellten Folien 10 haben bevorzugt eine Dicke (einschließlich der Bindephase 51, 52 und der Partikel 61, 62) im Bereich von 13 $\mu$m bis 2.000 $\mu$m, weiter bevorzugt im Bereich 13 $\mu$m bis 500 $\mu$m, und besonders bevorzugt im Bereich von 50 $\mu$m bis 200 $\mu$m. Die geeignete Dicke ist vom Anwendungsfall abhängig.

Insbesondere bei der Kraftübertragung im Maschinenbau ist eine Dicke der Schichtanordnung 10 im Bereich von ca. 90 $\mu$m bis ca. 150 $\mu$m vorteilhaft, da dünnere Verbindungselemente schwer hand zu haben sind und dickere Verbindungselemente zu größeren Toleranzen führen.

Bevorzugt hat hierbei der Grundkörper 21 aus organischem Material eine Dicke, die im Bereich von 30 $\mu$m bis 1.900 $\mu$m liegt, um eine ausreichende Stabilität bei der Beschichtung sicherzustellen. Besonders bevorzugt liegt die Dicke des Grundkörpers 21 im Bereich von 35 $\mu$m bis 145 $\mu$m, da geringere Dicken bei der Beschichtung mit der Funktionsschicht schwer hand zu haben sind und größere Dicken zu größeren Toleranzen führen.

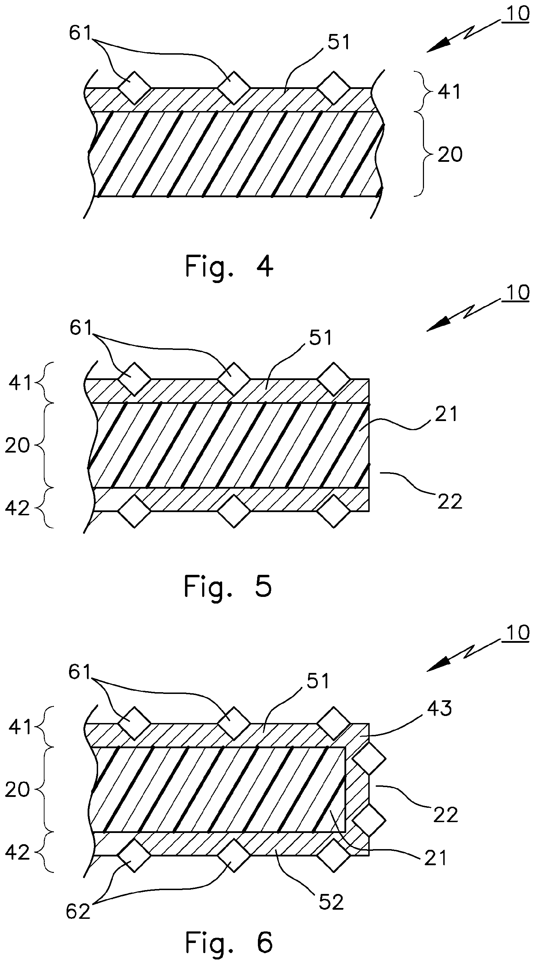

Es ist aber möglich, auch sehr dünne Schichtanordnungen 10 herzustellen. Hierzu kann beispielsweise als Grundkörper 21 eine Aramidfolie oder eine Polyamidfolie verwendet werden, die es in Dicken von beispielsweise 4,5 $\mu$m oder 5 $\mu$m gibt, vgl. z.B. EP 1 022 106 A1. Bei der Verwendung einer Funktionsschicht 41, 42 mit einer Dicke von jeweils ca. 5 $\mu$m kann somit eine Schichtanordnung (10) mit einer Dicke von unter 15 $\mu$m hergestellt werden. Solche dünnen Schichtanordnungen 10 sind vorteilhaft, da sie vergleichsweise flexibel sind, und die Dicke in eine Bereich liegt, der üblicherweise unterhalb des Toleranzbereichs liegt. Von besonderem Vorteil ist eine solche Schichtanordnung 10 in Anwendungsfällen, bei denen es nicht so sehr auf eine maximale Reibwerterhöhung ankommt, sondern beispielsweise mehr auf die elektrische Isolierung durch die Schichtanordnung, beispielsweise im Bereich einer Lageranordnung. Für solche Fälle kann auch eine Schichtanordnung 10 mit nur einer Funktionsschicht 41 vorteilhaft sein, wie sie in Fig. 4 gezeigt ist.

Die Gesamtdicke der Schichtanordnung 10 liegt für diese Anwendungsfälle bevorzugt im Bereich von 13 $\mu$m bis 80 $\mu$m, besonders bevorzugt im Bereich von 13 $\mu$m bis 50 $\mu$m, besonders bevorzugt im Bereich von 13 $\mu$m bis 30 $\mu$m.

Korrosion

Bei reibungserhöhenden Verbindungselementen mit einem Substrat aus Federstahl wurde bei Versuchen Korrosion festgestellt. Unter Korrosion versteht man die Reaktion eines metallischen Werkstoffs mit seiner Umgebung, die eine messbare Veränderung des Werkstoffs bewirkt und zu einer Beeinträchtigung der Funktion des metallischen Bauteils oder eines ganzen Systems führen kann.

Es wird vermutet, dass diese Korrosion maßgeblich durch eine elektrochemische Reaktion (galvanische Zelle) zwischen dem unedleren Federstahl und dem edleren Nickel hervorgerufen wird. Hierbei spielt eine Rolle, dass die verwendeten Ni-Schichten mit einer Dicke von beispielsweise 5 bis 9 $\mu$m in der Regel Poren aufweisen, durch die korrosive Medien zum Federstahl gelangen können. Die Korrosionsbeständigkeit wird durch die eingelagerten Partikel, die von der Funktionsschicht nur mechanisch umklammert werden, weiter nachteilig beeinflusst, da die Grenzflächen zwischen dem Partikel und der Bindephase den Zutritt korrosiver Medien zum Grundmaterial erleichtern. Im Automobilbereich treten als korrosive Medien z.B. im Außenbereich Salzwasser und im Motorbereich schwache Säuren wie z.B. schweflige Säure auf. Während das korrosive Medium an der Oberfläche einen verhältnismäßig großflächigen Kontakt zum Ni hat (Kathodenfläche), hat es nur punktuellen Kontakt zum Federstahl. Hierdurch fließt der gesamte anodische Strom zu wenigen Punkten des Federstahls, und dies kann an diesen Punkten zu einer starken Korrosion, insbesondere Lochkorrosion und Unterkorrosion, führen. Dies kann eine Zerstörung der Folie mit einhergehendem Funktionsverlust zur Folge haben.

Um einen gewissen Korrosionsschutz bei einem Substrat nach dem Stand der Technik aus Federstahl zu erreichen, ist es bei der Herstellung der reibungserhöhenden Scheiben erforderlich, dass zunächst die Scheiben durch Stanzen, Lasern oder Wasserstrahlschneiden aus einer Federstahlfolie geformt werden und anschließend zeitaufwändig auf geeigneten Warenträgern zur Beschichtung vereinzelt werden. Nur so kann eine allseitige Beschichtung und damit ein gewisser Korrosionsschutz erreicht werden.

Die Verwendung des organischen Grundkörpers 21 hat den Vorteil, dass das organische Material so gewählt werden kann, dass es unter den Bedingungen des jeweiligen Anwendungsfalls chemisch inert ist, also unter den jeweilig gegebenen Bedingungen mit potentiellen Reaktionspartnern nicht oder nur in verschwindend geringem Maße reagiert.

Bei der Verwendung eines organischen Grundkörpers 21 mit einem Metallbestandteil ist die Gefahr der Korrosion ebenfalls gering, da nur die Metallbestandteile an der Oberfläche gefährdet sind, der Großteil jedoch im Inneren vor dem korrosiven Medium geschützt angeordnet ist. Bevorzugt werden trotzdem Metallbestandteile verwendet, die edler als das Material der Funktionsschicht 41, 42 sind.

Durch die erfindungsgemäße Ausführungsform mit dem organischen Grundkörper 21 kann die Folienherstellung wesentlich vereinfacht werden, da das Ausgangsmaterial in Form von Platten (Batchbeschichtung) oder aber in einer Bandbeschichtungsanlage (Endlosbeschichtung) beschichtet werden kann und die Verbindungselemente 11 (vgl. Fig. 8) durch eines der oben genannten Verfahren nach dem Beschichten aus der Folie hergestellt werden können.

Bei dieser Art der Herstellung der Verbindungselemente 11 ist es nicht zu vermeiden, dass die Schnitt- oder Schneidkanten beschichtungsfrei sind. Da aber der Grundkörper 21 aus einem organischen Material und ggf. einem Nichteisenmetall mit entsprechend edlem elektrochemischen Potential besteht, kann keine Kontaktkorrosion mit Gefahr einer Zerstörung der Verbindungselemente 11 auftreten. Es ist aber natürlich auch möglich, die Folien zuerst zu vereinzeln und danach zu beschichten, wobei dies technisch aufwändiger ist.

Bei Verwendung einer metallischen Zwischenschicht 31, 32 (Fig. 2) bzw. 35, 37, 36, 38 (Fig. 3) wird das Metall bevorzugt so gewählt, das es das gleiche oder ein edleres elektrochemisches Potential als die Funktionsschicht 41, 42 hat. Bei dieser Konstellation wird eine große Anodenfläche (Funktionsschicht) zu einer kleiner Kathodenoberfläche (Zwischenschicht) eingestellt, so dass nur geringe, weniger kritische Korrosionsströme herrschen

Ein Vorteil der Bandbeschichtung besteht darin, dass man bei der Fertigung von Formkörpern nicht mehr an die Abmessungen des Beschichtungsbades gebunden ist und Folien bisher nicht oder nur sehr schwer möglicher Größe aus dem Band schneiden oder stanzen kann. Hierdurch werden beispielsweise Verbindungselemente für große Windräder möglich. Bei einem Bandbeschichtungsverfahren wird das zu beschichtende, bandförmige Substrat durch das Beschichtungsbad hindurch gezogen, so dass immer nur ein Teil des Substrats beschichtet wird. Nachdem das bandförmige Substrat vollständig durchgezogen wurde, ist es mit der mindestens einen Funktionsschicht versehen.

Salzsprühtests haben gezeigt, dass die Korrosionseigenschaften einer Folie 10 mit einem organischen Grundkörper 21 denen einer Folie mit einem Grundkörper aus Federstahl klar überlegen sind, wobei als Bindephase 51, 52 für die Partikel jeweils Ni verwendet wurde.

**Fig. 4** zeigt eine Folie 10, bei der nur auf einer Seite des Substrats 20 eine Funktionsschicht 41 vorgesehen ist. Dies ist z.B. vorteilhaft in Anwendungsfällen, bei denen es weniger auf die Reibwerterhöhung und mehr auf andere Eigenschaften wie den hohen elektrischen Widerstand oder die nicht-magnetische Eigenschaft ankommt.

**Fig. 5** zeigt eine Kante (Seitenfläche) 22 des Substrats 20, die nicht bzw. zumindest nicht vollständig mit der Funktionsschicht 41, 42 beschichtet ist. Dies kann z.B. erreicht werden, indem zuerst die Funktionsschichten 41, 42 aufgebracht werden und anschließend das Verbindungselement 10 gestanzt oder mit Laser geschnitten wird. Alternativ kann die Kante 22 auch vor der Beschichtung abgedeckt bzw. deaktiviert werden.

**Fig. 6** zeigt eine Kante (Seitenfläche) 22 des Substrats 20, die mit einer Schicht 43 beschichtet ist. Die Schicht 43 kann eine Zwischenschicht (vgl. 31, 32 aus Fig. 2 bzw. 35, 37, 36, 38 aus Fig. 3) und/oder eine Funktionsschicht (vgl. 41, 42 aus Fig. 1 bis Fig. 3) aufweisen. Eine metallische Schicht 43 hat den Effekt, dass die elektrische Leitfähigkeit der Folie 10 erhöht wird, was bei bestimmten Anwendungsfällen vorteilhaft ist (z.B. Potenzialausgleich).

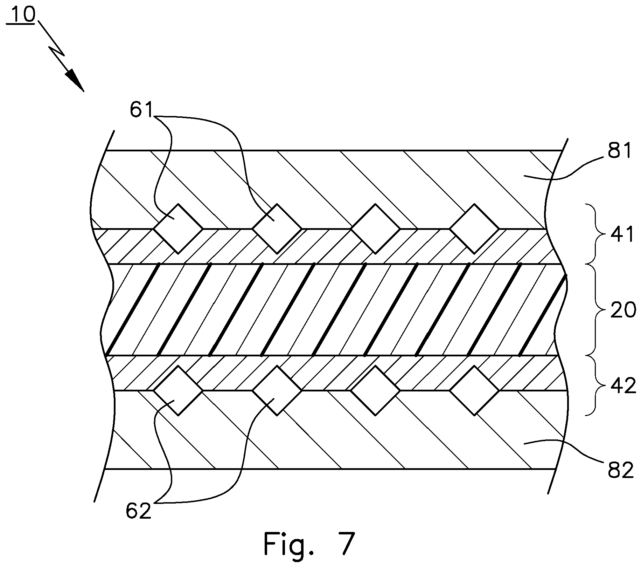

**Fig. 7** zeigt die Verwendung der Folie 10 zur Fügung der Bauteile 81, 82, z.B. zweier Teile einer Stirnpressverbindung. Die Partikel 61, 62 sind durch die Flächenpressung der Bauteile 81, 82 in deren Oberfläche eingedrungen und bewirken dadurch eine Mikroverzahnung. Durch die Folie 10 kann somit eine Reibungserhöhung zwischen den Bauteilen 81, 82 erzielt werden, wobei die Kraft bzw. das Drehmoment zwischen den Bauteilen 81, 82 durch das Substrat 20 übertragen wird.

**Fig. 8** zeigt ein Verbindungselement 11, welches eine Folie 10 gemäß einer oder mehrerer der vorhergehenden Figuren mit einem Grundkörper 21 aus einem organischen Material aufweist. Das Verbindungselement 11 ist beispielhaft ringförmig ausgebildet. Das Verbindungselement 11 kann auch als reibungserhöhendes Verbindungselement oder reibungserhöhende Kraftübertragungsscheibe bezeichnet werden. Es kann je nach Anwendungsfall auch andere Formen haben, z.B. viereckig oder hülsenförmig für die Befestigung einer Welle in einem Flansch.

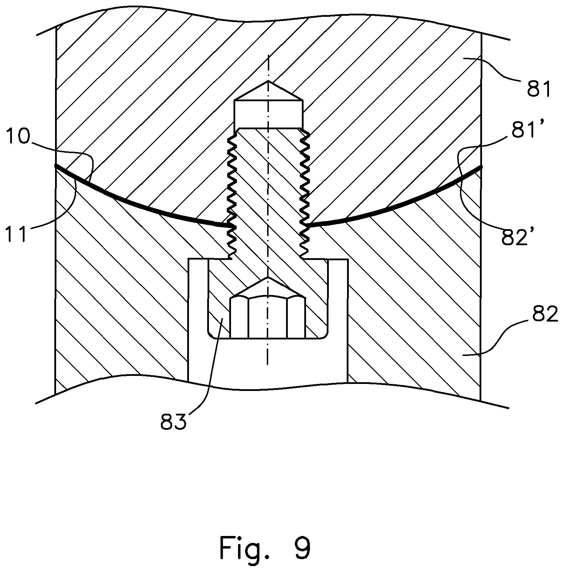

**Fig. 9** zeigt die Verwendung eines ringförmigen Verbindungselements 11 mit einer Folie 10 gemäß Fig. 8. Die Bauteile 81, 82, hier z.B. eine Welle, werden durch eine Schraube 83 verpresst. Die Kontaktflächen 81', 82' der Bauteile 81, 82 sind - übertrieben dargestellt - gekrümmt ausgebildet, so dass das Verbindungselement 11 ebenfalls gekrümmt ist. Entweder wird hierfür ein ebenes Verbindungselement 11 gemäß Fig. 8 verwendet, das bei der Fügung die entsprechende gekrümmte Form annimmt. Alternativ kann das Verbindungselement 11 auch gekrümmt hergestellt werden.

Es wurden unterschiedliche Versuche durchgeführt.

**Beispiel 1**

Eine Folie 10 wurde wie folgt hergestellt. Als Substrat 20 wird eine Folie mit dem Handelsnamen IS400 der Fa. Isola GmbH, Düren, Deutschland und der Laminatdicke 0,100 mm verwendet. Dieses Substrat hat die folgenden Eigenschaften:

| | |
|---|---|
| Trägermaterial: | Gewebe aus E-Glas |
| Harzsystem: | primär: difunktionelles Epoxy, sekundär: polyfunktionelles Epoxy |
| Flammschutzmittel: | bromiertes Epoxidharz |
| Füllstoff: | anorganischer Füllstoff |

Dieses Substrat 20 ist handelsfertig auf jeder Seite mit einer Zwischenschicht 37, 38 aus Kupfer mit einer Dicke 18 $\mu$m kaschiert.

Auf dieses Substrat 20 wird durch chemische Abscheidung auf beide Seiten eine Funktionsschicht 41, 42 aus Nickel (Dicke: 6 - 8 $\mu$m) mit darin eingebetteten Diamanten (mittlere Größe: 10 $\mu$m, Konzentration: 10 - 30 Flächen-%) aufgebracht. Der Flächenanteil wird üblicherweise gemessen, indem eine vergrößerte Aufnahme der Oberfläche gemacht wird und anschließend über Bildbearbeitung der Flächenanteil der Hartstoffpartikel, die sich optisch von der Bindephase unterscheiden, ermittelt wird.

Mit dieser Folie wurden in einem Prüfstand Messungen der Reibungskoeffizienten durchgeführt, bei der zwei ringförmige, hohlzylindrische Probekörper mit einer zwischen diesen angeordneten reibungserhöhenden Schichtanordnung 10 einerseits von einem Hydraulikzylinder zur Erzeugung eines Fugendrucks mit einer Normalkraft (Vorspannkraft) F_N beaufschlagt werden und andererseits über einen hydraulischen Drehzylinder und eine biegeweiche Kupplung mit einem Torsionsmoment beaufschlagt werden. Gemessen wird üblicherweise eine Kurve, bei der das Torsionsmoment T über den Verdrehwinkel aufgezeichnet wird. Diese Kurve wird auch als Rutschkurve bezeichnet. Der Aufbau eines entsprechenden Prüfstands ist auch in der EP 1 564 418 B1 beschrieben.

Bei einem so genannten statischen Versuch werden die Probenkörper einmalig gegeneinander verdreht und das Torsionsmoment T gemessen. Bei einem dynamischen Torsionsversuch werden die Probenkörper dynamisch wechselnd mit 80 % des Torsionsmoments (Rutschmoments) bei einem Verdrehwinkel von 0,1 ° belastet. Nach einer Million Lastwechseln wird anschließend ein statischer Versuch durchgeführt und die Rutschkurve gemessen.

Aus dem ermittelten Torsionsmoment T kann der verdrehwinkelabhängige Reibungskoeffizient (Reibungszahl, Reibwert) $\mu$ rechnerisch ermittelt werden, wobei nicht explizit zwischen Haftreibung und Gleitreibung unterschieden wird.

Der Reibungskoeffizient $\mu$ ergibt sich aus

$$\mu = (2 * T) / (D\_R * F\_N)$$

mit

T = Torsionsmoment
F_N = Normalkraft
D_R = $(2 * (D\_A^3 - D\_I^3)) / (3 * D\_A^2 - D\_I^2))$ (mittlerer Torsionsmoment-Durchmesser)
D_A = Außendurchmesser des zylindrischen Probenkörpers
D_I = Innendurchmesser des zylindrischen Probenkörpers

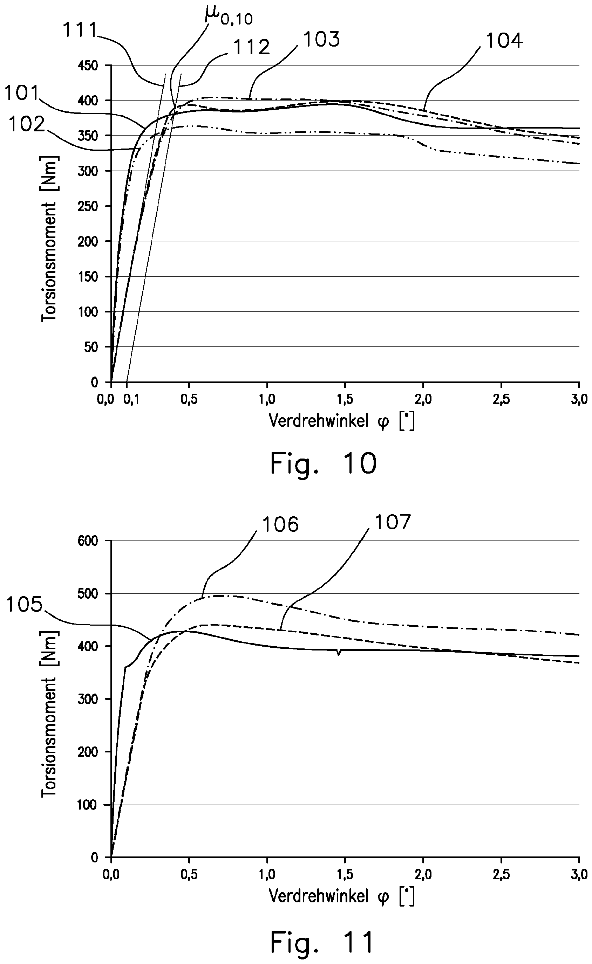

**Fig. 10** zeigt die Rutschkurve für den statischen Versuch bei einem Fugendruck in Höhe von 100 MPa, wie er häufig im Maschinenbau verwendet wird. Es sind vier Messkurven 101, 102, 103, 104 eingezeichnet.

Die Anfangssteigung der Messkurven entspricht einem Bereich, in dem zwar auf Grund des Torsionsmoments entstehenden Grundtorsionsbewegung der gesamten Probekörper ein Verdrehwinkel auftritt, jedoch noch kein Rutschen im Bereich der Folie 10. Der Verdrehwinkel wird entsprechend dieser werkstoffabhängigen Anfangssteigung gemessen, um diese Grundtorsionsbewegung zu eliminieren, wie dies beispielhaft für die Ermittlung des Werts $\mu0,1$ eingezeichnet ist.

Es folgt eine Tabelle mit den Messergebnissen.

| Werkstoff Proben körper | Versuch Nr. | Vorspannkraft [kN] | Fugendruck [MPa] | Torsionsmoment ($\mu0,1$) [Nm] | $\mu_{0,1°}$ |
|---|---|---|---|---|---|
| Stahl | 101 | 53,0 | 100,0 | 352 | 0,57 |
| Stahl | 102 | 53,1 | 100,2 | 341 | 0,55 |
| Aluminium | 103 | 53,0 | 100,0 | 382 | 0,62 |
| Aluminium | 104 | 53,0 | 100,0 | 390 | 0,63 |

Bei der Werkstoffpaarung Stahl - Stahl beträgt der Reibungskoeffizient im trockenen Zustand ca. 0,15, Es tritt also eine deutliche Erhöhung des Reibungskoeffizienten um den Faktor 3,5 auf.

**Fig. 11** zeigt die Rutschkurve für den dynamischen Versuch bei einem Fugendruck in Höhe von 100 MPa. Es sind drei Messkurven 105, 106, 107 eingezeichnet.

Es folgt eine Tabelle mit den Messergebnissen.

| Werkstoff Proben körper | Versuch Nr. | Vorspannkraft [kN] | Fugendruck [MPa] | Torsionsmoment ($\mu0,1$) [Nm] | $\mu_{0,1°}$ |
|---|---|---|---|---|---|
| Stahl | 105 | 51,6 | 97,3 | 398 | 0,66 |
| Aluminium | 106 | 52,7 | 99,4 | 447 | 0,73 |
| Aluminium | 107 | 49,9 | 94,1 | 410 | 0,70 |

Die Reibungskoeffizienten (Haftbeiwerte; Haftkoeffizienten) sind im Vergleich zu den Ergebnissen aus den statischen Versuchen um ca. 20 % gestiegen. In der Verbindung trat während der dynamischen Belastung unterhalb der Rutschgrenze kein globales Rutschen auf.

Erstaunlicherweise haben die Untersuchungen unter statischen und dynamischen Bedingungen Reibungskoeffizienten (Haftbeiwerte) ergeben, die vergleichbar sind mit den bekannten Reibscheiben mit metallischem Grundkörper. Dies war auf Grund der geringeren mechanischen Festigkeitswerte nicht zu erwarten.

Eine optische Untersuchung hat ergeben, dass die Diamanten in die zu fügenden Bauteile eingedrungen sind, und sie sind nicht bzw. zumindest nicht vollständig in das Substrat 20 eingedrungen, so dass eine reversible Verbindung möglich ist. Ein großflächiges Ablösen der Hartstoffpartikel vom Substrat wurde nicht festgestellt.

Es wurden auch Versuche mit einem Fugendruck von 30 MPa durchgeführt, und die Ergebnisse waren ebenfalls gut.

**Beispiel 2**

Aus dem Material gemäß Beispiel 1 wird ein Verbindungselement 11 gemäß Fig. 8 hergestellt. Dieses hat einen Innendurchmesser D1 = 15 mm, einen Außendurchmesser D2 = 30 mm und eine Dicke von 0,10 mm. Die Oberflächen fühlen sich durch die Hartstoffpartikel rauh an wie eine sehr feine Nagelfeile. Das Verbindungselement ist durch Biegen leicht plastisch verformbar, es verbleibt also nach dem Biegen in einer gebogenen Form.

**Beispiel 3**

Eine Folie 10 wird hergestellt aus einem kaschierten Substrat 20 gemäß Beispiel 1. Das kaschierte Substrat 20 wird in eine Halterung eingelegt und für die chemische Beschichtung vorbehandelt durch Entfetten, Spülen, Aktivieren und Spülen. Anschließend wird das kaschierte Substrat in ein NiP-Bad mit den Hartstoffpartikeln eingetaucht, und die chemische Abscheidung der Funktionsschicht 41, 42 wird durch einen anfänglichen Stromstoß mit dem Substrat als Kathode in Gang gesetzt. Anschließend erfolgt die chemische Abscheidung außenstromlos, was an einer Gasbildung zu erkennen ist. Es wurden bei der chemischen Beschichtung beispielsweise Abscheideraten von 8 bis 20 $\mu$m/h erzielt. Während der chemischen Beschichtung wird das Substrat 20 rotiert, und die Hartstoffpartikel 61, 62 werden im Ni-Bad durch Rühren verteilt gehalten.

**Beispiel 4**

Eine Folie 10 wurde hergestellt aus einem kaschierten Substrat 20 gemäß Beispiel 1. Es erfolgte ein Beschichtung mit einer NiP-Matrix mit eingebetteten Diamantpartikeln. Der Phosphormassenanteil wurde größer als 10 % eingestellt, und Messungen haben ergeben, dass die Folie 10 nicht-magnetisch ist.

**Beispiel 5**

Eine Folie 10 wurde hergestellt aus einem kaschierten Substrat 20 gemäß Beispiel 1. Ein Reibelement wurde durch Stanzen, Lasern oder Wasserstrahlschneiden aus der Folie 10 geschnitten. Messungen haben ergeben, dass entsprechen hergestellte Verbindungselemente als elektrischer Isolator wirken.

**Beispiel 6**

Eine Folie 10 wurde hergestellt aus einem kaschierten Substrat 20 gemäß Beispiel 1. Es wurden standardisierte Korrosionstests durchgeführt, und die Korrosionsbeständigkeit der Folie 10 war im Vergleich zur Korrosionsbeständigkeit einer Folie mit einem metallischen Substrat deutlich höher.

Die Zeichnungen und die Beschreibung zeigen eine Schichtanordnung (10) zur reibungserhöhenden Verbindung von zu fügenden Bauteilen (81, 82), welche aufweist:

Ein Substrat (20) mit einem Grundkörper (21) aus einem organischen Polymer und mindestens eine mit dem Substrat verbundene Funktionsschicht (41, 42) mit einer metallischen Bindephase (51, 52) und in der metallischen Bindephase fixierten Hartstoffpartikeln (61, 62).

Gemäß einer Ausführungsform weist die Schichtanordnung mindestens zwei Funktionsschichten (41, 42) auf, welche auf gegenüberliegenden Seiten des Substrats (20) angeordnet sind.

Gemäß einer Ausführungsform sind die mindestens zwei Funktionsschichten (41, 42) durch den Grundkörper zumindest bereichsweise elektrisch voneinander isoliert.

Gemäß einer Ausführungsform weist das Substrat (20) mindestens eine metallische Zwischenschicht (31, 32; 37, 38) auf, welche zwischen dem Grundkörper (21) und der Funktionsschicht (41, 42) angeordnet ist.

Gemäß einer Ausführungsform weist die metallische Zwischenschicht (31, 32; 37, 38) ein gleiches oder edleres elektrochemisches Potential auf als die metallische Bindephase (51, 52) der Funktionsschicht (41, 42).

Gemäß einer Ausführungsform ist die metallische Zwischenschicht (37, 38) durch Kaschierung mit dem Grundkörper (21) verbunden.

Gemäß einer Ausführungsform weist der Grundkörper (21) als organisches Polymer ein Polyimid oder Aramid auf.

Gemäß einer Ausführungsform weist der Grundkörper (21) ein faserverstärktes organisches Polymer auf.

Gemäß einer Ausführungsform weist der Grundkörper (21) ein glasfaserverstärktes oder Carbon-faserverstärktes organisches Polymer auf.

Gemäß einer Ausführungsform ist die Schichtanordnung flächig mit zwei sich gegenüberliegenden Grundflächen und mit Kanten (22) ausgebildet, wobei die Kanten im Bereich des Grundkörpers (21) zumindest teilweise nicht beschichtet sind.

Gemäß einer Ausführungsform ist das Substrat (20) nicht-magnetisch ausgebildet, und die Schichtanordnung (10) ist bevorzugt aus nicht-magnetischen Werkstoffen ausgebildet.

Gemäß einer Ausführungsform ist die Schichtanordnung als Folie (10) ausgebildet.

Gemäß einer Ausführungsform weist die metallische Bindephase (51, 52) einen Werkstoff auf, der aus der Gruppe ausgewählt ist, die gebildet wird durch

- Nickel,
- Kupfer,
- Cobalt,
- Chrom,
- Zink,
- Kupferlegierung,
- Legierung auf Kupfer-Zinn-Basis
- Nickellegierung,
- Legierung auf Nickel-Phosphor-Basis
- Legierung auf Nickel-Zinn-Basis.

Gemäß einer Ausführungsform weisen die Hartstoffpartikel mindestens einen Hartstoff auf, der aus der Gruppe ausgewählt ist, die gebildet wird durch

- Diamant,
- kubisches Bornitrid,
- Siliciumnitrid,
- Borcarbid,
- Wolframcarbid,
- Siliciumcarbid,
- Titanborid, und
- Aluminiumoxid.

Gemäß einer Ausführungsform weisen die Hartstoffpartikel eine mittlere Größe auf, die im Bereich von 10 $\mu$m bis 40 $\mu$m liegt.

Gemäß einer Ausführungsform haben die Hartstoffpartikel (61, 62) einen Oberflächenanteil im Bereich von 10 % bis 30 % der Oberfläche der Funktionsschicht (41,42).

Gemäß einer Ausführungsform hat der Grundkörper (21) einen spezifischen Widerstand $\rho$, der größer als 109 $\Omega \cdot$ m ist.

Gemäß einer Ausführungsform weist die Schichtanordnung eine Dicke auf, die im Bereich von 13 $\mu$m bis 2.000 $\mu$m liegt, bevorzugt im Bereich von 13 $\mu$m bis 500 $\mu$m liegt.

Gemäß einer Ausführungsform weist der Grundkörper (21) aus organischem Material eine Dicke auf, die im Bereich von 4 $\mu$m bis 1.900 $\mu$m, bevorzugt im Bereich von 4 $\mu$m bis 145 $\mu$m liegt.

Gemäß einer Ausführungsform weist die Schichtanordnung eine Dicke auf, die im Bereich von 13 $\mu$m bis 80 $\mu$m, besonders bevorzugt im Bereich von 13 $\mu$m bis 50 $\mu$m liegt.

Gemäß einer Ausführungsform ist die Schichtanordnung bandförmig ausgebildet und aufgerollt.

Die Zeichnungen und die Beschreibung zeigen ein Verbindungselement (11), welches eine oben beschriebene Schichtanordnung (10) aufweist, wobei das Verbindungselement (11) durch Stanzen, Schneiden oder Laserschneiden aus der Schichtanordnung abgetrennt ist.

Die Zeichnungen und die Beschreibung zeigen ein Verfahren zur Herstellung einer Schichtanordnung, welche Schichtanordnung (10) ein Substrat (20) mit einem Grundkörper (21) aus einem organischen Polymer und mindestens eine mit dem Substrat verbundene Funktionsschicht (41, 42) mit einer metallischen Bindephase (51, 52) und in der metallischen Bindephase fixierten Hartstoffpartikeln (61, 62) aufweist, welches Verfahren den folgenden Schritt aufweist:

A) Die Funktionsschicht (41, 42) wird mit dem Substrat (20) verbunden.

Gemäß einer Ausführungsform wird im Schritt A) die Funktionsschicht (41, 42) auf dem Substrat (20) durch chemische oder galvanische Beschichtung gebildet.

Gemäß einer Ausführungsform wird die chemische oder galvanische Beschichtung mit einem Bandbeschichtungsverfahren durchgeführt.

Gemäß einer Ausführungsform wird das Substrat (20) vor dem Schritt A) mit einer elektrisch leitfähigen Zwischenschicht (31, 32; 37, 38) versehen, und anschließend erfolgt im Schritt A) die Abscheidung der Funktionsschicht (41, 42) auf der elektrisch leitenden Zwischenschicht (31, 32; 37, 38) des Substrats (20).

Gemäß einer Ausführungsform wird die elektrisch leitfähige Zwischenschicht (37, 38) mit dem Grundkörper (21) durch eines der folgenden Verfahren verbunden:

- Kaschierung des Grundkörpers (21) mit der Zwischenschicht,
- physikalische Gasphasenabscheidung,
- chemische Gasphasenabscheidung,
- chemische Metallisierung,
- thermisches Spritzen.

Gemäß einer Ausführungsform wird die Schichtanordnung (10) bandförmig hergestellt und anschließend aufgerollt. Erfindungsgemäß wird nach dem Schritt A) ein Verbindungselement (11) aus der Schichtanordnung (10) abgetrennt, insbesondere durch Stanzen, Schneiden oder Laserschneiden.

Gemäß einer Ausführungsform ist die Schichtanordnung (10) wie oben ausgeführt ausgebildet.

Naturgemäß sind im Rahmen der vorliegenden Erfindung vielfältige Abwandlungen und Modifikationen möglich.

## Patentansprüche

1. Schichtanordnung (10) zur reibungserhöhenden Verbindung von zu fügenden Bauteilen (81, 82), welche aufweist: Ein Substrat (20) mit einem Grundkörper (21) aus einem organischen Polymer; und mindestens eine mit dem Substrat verbundene Funktionsschicht (41, 42) mit einer metallischen Bindephase (51, 52) und in der metallischen Bindephase fixierten Hartstoffpartikeln (61, 62).

2. Schichtanordnung nach Anspruch 1, welche mindestens zwei Funktionsschichten (41, 42) aufweist, welche auf gegenüberliegenden Seiten des Substrats (20) angeordnet sind.

3. Schichtanordnung nach Anspruch 2, bei welcher die mindestens zwei Funktionsschichten (41, 42) durch den Grundkörper zumindest bereichsweise elektrisch voneinander isoliert sind.

4. Schichtanordnung nach einem der vorhergehenden Ansprüche, bei welcher das Substrat (20) mindestens eine metallische Zwischenschicht (31, 32; 37, 38) aufweist, welche zwischen dem Grundkörper (21) und der Funktionsschicht (41, 42) angeordnet ist.

5. Schichtanordnung nach Anspruch 4, bei welcher die metallische Zwischenschicht (31, 32; 37, 38) ein gleiches oder edleres elektrochemisches Potential aufweist als die metallische Bindephase (51, 52) der Funktionsschicht (41,42).

6. Schichtanordnung nach einem der vorhergehenden Ansprüche, bei welcher die metallische Zwischenschicht (37, 38) durch Kaschierung mit dem Grundkörper (21) verbunden ist.

7. Schichtanordnung nach einem der vorhergehenden Ansprüche, bei welcher der Grundkörper (21) ein faserverstärktes organisches Polymer aufweist, insbesondere ein glasfaserverstärktes oder Carbon-faserverstärktes organisches Polymer.

8. Schichtanordnung nach einem der vorhergehenden Ansprüche, bei welcher das Substrat (20) nicht-magnetisch ausgebildet ist, und welche Schichtanordnung (10) bevorzugt aus nicht-magnetischen Werkstoffen ausgebildet ist.

9. Schichtanordnung (10) nach einem der vorhergehenden Ansprüche, welche als Folie (10) ausgebildet ist.

10. Schichtanordnung nach einem der vorhergehenden Ansprüche, bei welcher der Grundkörper (21) einen spezifischen Widerstand $\rho$ hat, der größer als $10^9 \, \Omega \cdot m$ ist.

11. Schichtanordnung nach einem der vorhergehenden Ansprüche, bei welcher der Grundkörper (21) aus organischem Material eine Dicke aufweist, die im Bereich von 4 $\mu$m bis 1.900 $\mu$m, bevorzugt im Bereich von 4 $\mu$m bis 145 $\mu$m liegt.

12. Schichtanordnung nach einem der vorhergehenden Ansprüche, welche bandförmig ausgebildet und aufgerollt ist.

13. Verfahren zur Herstellung einer Schichtanordnung,
welche Schichtanordnung (10) ein Substrat (20) mit einem Grundkörper (21) aus einem organischen Polymer und mindestens eine mit dem Substrat verbundene Funktionsschicht (41, 42) mit einer metallischen Bindephase (51, 52) und in der metallischen Bindephase fixierten Hartstoffpartikeln (61, 62) aufweist,
welches Verfahren die folgenden Schritte aufweist:

A) Die Funktionsschicht (41, 42) wird mit dem Substrat (20) verbunden;
B) nach Schritt A) wird ein Verbindungselement (11) aus der Schichtanordnung (10) abgetrennt, insbesondere durch Stanzen, Schneiden oder Laserschneiden.

14. Verfahren nach Anspruch 13, bei welchem im Schritt A) die Funktionsschicht (41, 42) auf dem Substrat (20) durch chemische oder galvanische Beschichtung gebildet wird, und bei welchem die chemische oder galvanische Beschichtung bevorzugt mit einem Bandbeschichtungsverfahren durchgeführt wird.

15. Verfahren nach Anspruch 13 oder 14, bei welchem das Substrat (20) vor dem Schritt A) mit einer elektrisch leitfähigen Zwischenschicht (31, 32; 37, 38) versehen wird, und anschließend im Schritt A) die Abscheidung der Funktionsschicht (41, 42) auf der elektrisch leitenden Zwischenschicht (31, 32; 37, 38) des Substrats (20) erfolgt, und bei welchem bevorzugt die elektrisch leitfähige Zwischenschicht (37, 38) mit dem Grundkörper (21) durch eines der folgenden Verfahren verbunden wird:

• Kaschierung des Grundkörpers (21) mit der Zwischenschicht,
• physikalische Gasphasenabscheidung,
• chemische Gasphasenabscheidung,
• chemische Metallisierung,
• thermisches Spritzen.

## Claims

1. Layer arrangement (10) for connecting components (81, 82) to be joined so as to increase friction, which layer arrangement comprises: a substrate (20) having a main body (21) made of an organic polymer; and at least one functional layer (41, 42) which is connected to the substrate and which has a metal binder phase (51, 52) and hard material particles (61, 62) fixed in the metal binder phase.

2. Layer arrangement according to claim 1, which comprises at least two functional layers (41, 42) which are arranged on opposite sides of the substrate (20).

3. Layer arrangement according to claim 2, wherein the at least two functional layers (41, 42) are electrically insulated from one another at least in regions by the main body.

4. Layer arrangement according to any of the preceding claims, wherein the substrate (20) comprises at least one metal intermediate layer (31, 32; 37, 38) which is arranged between the main body (21) and the functional layer (41, 42).

5. Layer arrangement according to claim 4, wherein the metal intermediate layer (31, 32; 37, 38) has an electrochemical potential that is the same or more noble than the metal binder phase (51, 52) of the functional layer (41, 42).

6. Layer arrangement according to any of the preceding claims, wherein the metal intermediate layer (37, 38) is connected to the main body (21) by lamination.

7.  Layer arrangement according to any of the preceding claims, wherein the main body (21) comprises a fibre reinforced organic polymer, in particular a glass-fibre reinforced or carbon-fibre reinforced organic polymer.

8.  Layer arrangement according to any of the preceding claims, wherein the substrate (20) is non-magnetic, and which layer arrangement (10) is preferably made of non-magnetic materials.

9.  Layer arrangement (10) according to any of the preceding claims, which is in the form of a film (10).

10. Layer arrangement according to any of the preceding claims, wherein the main body (21) has a specific resistance $\rho$ which is greater than $10^9 \, \Omega \cdot \text{m}$.

11. Layer arrangement according to any of the preceding claims, wherein the main body (21) made of organic material has a thickness which is in the range of from 4 $\mu$m to 1900 $\mu$m, preferably in the range of from 4 $\mu$m to 145 $\mu$m.

12. Layer arrangement according to any of the preceding claims, which is strip-shaped and rolled up.

13. Method for producing a layer arrangement, which layer arrangement (10) comprises a substrate (20) having a main body (21) made of an organic polymer and at least one functional layer (41, 42) which is connected to the substrate and has a metal binder phase (51, 52) and hard material particles (61, 62) fixed in the metal binder phase, which method comprises the following steps:

    A) the functional layer (41, 42) is connected to the substrate (20);
    B) after step A) a connecting element (11) is detached from the layer arrangement (10), in particular by stamping, cutting or laser cutting.

14. Method according to claim 13, wherein in step A) the functional layer (41, 42) is formed on the substrate (20) by chemical plating or electroplating, and wherein the chemical plating or electroplating is preferably carried out by means of a coil coating method.

15. Method according to either claim 13 or claim 14, wherein before step A) the substrate (20) is provided with an electrically conductive intermediate layer (31, 32; 37, 38), and subsequently in step A) the functional layer (41, 42) is deposited on the electrically conductive intermediate layer (31, 32; 37, 38) of the substrate (20), and wherein the electrically conductive intermediate layer (37, 38) is preferably connected to the main body (21) by one of the following methods:

    - lamination of the main body (21) with the intermediate layer,
    - physical vapour deposition,
    - chemical vapour deposition,
    - chemical metallisation,
    - thermal spraying.

**Revendications**

1.  Ensemble stratifié (10) pour l'assemblage augmentant le frottement de pièces (81, 82) à assembler, qui présente : un substrat (20) présentant un corps de base (21) en un polymère organique; et au moins une couche fonctionnelle (41, 42) assemblée avec le substrat, présentant une phase de liant (51, 52) métallique et des particules dures (61, 62) fixées dans la phase de liant métallique.

2.  Ensemble stratifié selon la revendication 1, qui présente au moins deux couches fonctionnelles (41, 42) qui sont disposées sur des faces opposées du substrat (20) .

3.  Ensemble stratifié selon la revendication 2, dans lequel lesdites au moins deux couches fonctionnelles (41, 42) sont isolées électriquement l'une de l'autre, au moins par zones, par le corps de base.

4.  Ensemble stratifié selon l'une quelconque des revendications précédentes, dans lequel le substrat (20) présente au moins une couche intermédiaire (31, 32; 37, 38) métallique, qui est disposée entre le corps de base (21) et la couche fonctionnelle (41, 42).

**5.** Ensemble stratifié selon la revendication 4, dans lequel la couche intermédiaire (31, 32; 37, 38) métallique présente un potentiel électrochimique identique ou plus noble que celui de la phase de liant (51, 52) métallique de la couche fonctionnelle (41, 42) .

**6.** Ensemble stratifié selon l'une quelconque des revendications précédentes, dans lequel la couche intermédiaire (37, 38) métallique est assemblée par laminage avec le corps de base (21).

**7.** Ensemble stratifié selon l'une quelconque des revendications précédentes, dans lequel le corps de base (21) présente un polymère organique renforcé par des fibres, en particulier un polymère organique renforcé par des fibres de verre ou par des fibres de carbone.

**8.** Ensemble stratifié selon l'une quelconque des revendications précédentes, dans lequel le substrat (20) est réalisé de manière non magnétique et lequel ensemble stratifié (10) est de préférence réalisé à partir de matériaux non magnétiques.

**9.** Ensemble stratifié (10) selon l'une quelconque des revendications précédentes, qui est réalisé sous forme de feuille (10).

**10.** Ensemble stratifié selon l'une quelconque des revendications précédentes, dans lequel le corps de base (21) présente une résistance spécifique $\rho$ qui est supérieure à $10^9 \, \Omega * m$.

**11.** Ensemble stratifié selon l'une quelconque des revendications précédentes, dans lequel le corps de base (21) en matériau organique présente une épaisseur qui est située dans la plage de 4 $\mu$m à 1900 $\mu$m, de préférence dans la plage de 4 $\mu$m à 145 $\mu$m.

**12.** Ensemble stratifié selon l'une quelconque des revendications précédentes, qui est conçu sous forme de bande et enroulé.

**13.** Procédé pour la fabrication d'un ensemble stratifié, lequel ensemble stratifié (10) présente un substrat (20) présentant un corps de base (21) en un polymère organique et au moins une couche fonctionnelle (41, 42) assemblée avec le substrat, présentant une phase de liant (51, 52) métallique et des particules dures (61, 62) fixées dans la phase de liant métallique, lequel procédé présente les étapes suivantes :

A) la couche fonctionnelle (41, 42) est assemblée avec le substrat (20);
B) après l'étape A), un élément d'assemblage (11) est séparé de l'ensemble stratifié (10), en particulier par matriçage, découpe ou découpe au laser.

**14.** Procédé selon la revendication 13, dans lequel, dans l'étape A), la couche fonctionnelle (41, 42) sur le substrat (20) est formée par revêtement chimique ou galvanique et dans lequel le revêtement chimique ou galvanique est de préférence réalisé par un procédé de revêtement de bande.

**15.** Procédé selon la revendication 13 ou 14, dans lequel le substrat (20) est pourvu, avant l'étape A), d'une couche intermédiaire (31, 32; 37, 38) électriquement conductrice et dans lequel a ensuite lieu, dans l'étape A), le dépôt de la couche fonctionnelle (41, 42) sur la couche intermédiaire (31, 32; 37, 38) électriquement conductrice du substrat (20) et dans lequel, de préférence, la couche intermédiaire (37, 38) électriquement conductrice est assemblée avec le corps de base (21) par un des procédés suivants :

- laminage du corps de base (21) et de la couche intermédiaire,
- dépôt physique en phase gazeuse,
- dépôt chimique en phase gazeuse,
- métallisation chimique,
- projection thermique.

Fig. 1

Fig. 2

Fig. 3

Fig. 4

Fig. 5

Fig. 6

Fig. 7

D2

11

10

D1

21

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0961038 B1
- EP 1564418 B1
- FR 2565870 A1
- EP 1564418 A
- EP 1022106 A1